# FASCICULE DE BREVET EUROPEEN

(11) **EP 1 526 019 B1**
(45) Date de publication et mention de la délivrance du brevet: **15.04.2009**
(21) Numéro de dépôt: 05001418.2
(22) Date de dépôt: 28.11.1996
(51) Int. Cl.: B60J 1/16

(54) **Dispositif de fermeture d'une baie de véhicule automobile, à panneau fixe en plusieurs parties**
Vorrichtung zum Schliessen einer Fahrzeugöffnung, mit feststehendem, mehrteiligem Paneel
Closing device for a vehicle, with stationary multi-part panel

(30) Priorité: 08.12.1995 FR 9514566
(43) Date de publication de la demande: 27.04.2005
(62) Demande divisionnaire de: 00107472.3
(73) Titulaire: Wagon SAS, 79302 Bressuire Cédex (FR)
(72) Inventeur: Neaux, Jean-Claude, 79300 Terves (FR)
(74) Mandataire: Bioret, Ludovic

(56) Documents cités:
- EP-A- 0 449 372
- BE-A- 358 158
- FR-A- 2 552 483
- US-A- 1 809 132
- US-A- 2 282 980

## Description

La présente invention concerne un dispositif de fermeture affleurant d'une baie de carrosserie (BE 358 158 A).

Le moyen le plus connu de rapporter une glace sur la baie d'un véhicule tel qu'une automobile, un autobus, un camion ou même un wagon de chemin de fer, consiste à prévoir un cadre de liaison de la glace aux bords de la baie qui est en deux parties interne et externe rapprochées l'une de l'autre pour pincer simultanément les bords de la glace et de l'ouverture avec une garniture d'étanchéité.

Les critères d'ordre esthétique ayant évolué, la tendance est actuellement de chercher à supprimer sinon la présence du moins l'impression visuelle de rupture que constitue un cadre de manière que la glace soit perçue comme une portion transparente de la carrosserie sans solution de continuité avec elle.

Par la présente invention, on propose une solution permettant de fermer une baie de véhicule par un panneau affleurant pourvu d'une partie mobile pour assurer une fonction d'aération.

A cet effet l'invention a pour objet un dispositif de fermeture d'une baie pratiquée dans la carrosserie d'un véhicule selon la revendication 1.

Le dispositif d'obturation de la baie ne possède donc aucun cadre extérieur qui fasse saillie par rapport à la carrosserie, contrairement à ce qui est le cas aujourd'hui pour des dispositifs qui comportent des panneaux en deux parties c'est-à-dire des vitres dont une partie est mobile par rapport à une partie fixe pour assurer la ventilation ou l'aération d'une cabine ou d'un habitacle de véhicule.

L'un des modes de fixation des éléments fonctionnels sur la face interne du panneau fixe sera le collage. On peut également mettre en oeuvre des moyens de fixation traversants dont la partie située à l'extérieur du panneau peut être recouverte d'un cache relativement aplati.

Le panneau fixe est reconstitué à partir de plusieurs pièces autour d'un évidement, les zones de jonction de ces pièces étant masquées par des profils affleurant de liaison et par des motifs par exemple sérigraphiés sur ces pièces. Les éléments fonctionnels peuvent également coopérer à l'assemblage des pièces constitutives du panneau fixe.

Dans un second mode de réalisation, le panneau fixe est simplement rapporté par collage sur les bords renfoncés de la baie de carrosserie.

Dans ce cas notamment, si les éléments fonctionnels comportent au moins une traverse, celle-ci s'étend jusqu'aux bords du panneau de sorte que les extrémités de la traverse sont prises en sandwich entre le panneau et les bords de la baie. Cette disposition permet de répondre à certaines exigences normatives relatives au bris de glace sur les véhicules.

Le panneau mobile qui constitue l'élément permettant l'aération souhaitée, peut être pivotant ou coulissant. Dans le cas d'un élément pivotant, la traverse constitue l'élément fixe d'une charnière longitudinale dont l'élément mobile porte le panneau mobile par collage le long d'un bord de ce panneau.

Dans le cas d'un panneau d'aération coulissant, les éléments fonctionnels comportent deux traverses parallèles de support de rails de guidage pour ce panneau, les rails ayant éventuellement une forme appropriée pour un mouvement louvoyant de ce panneau mobile par rapport au panneau fixe.

D'autres caractéristiques et avantages de l'invention ressortiront de la description donnée ci-après des plusieurs modes de réalisation.

Il sera fait référence aux dessins annexés parmi lesquels :
- la figure 1 est une vue de face d'un premier mode de réalisation d'un dispositif proche de celui l'invention,
- la figure 2 est une coupe selon le plan II-II de la figure 1,
- la figure 3 est une vue en coupe selon le plan III-III de la figure 1,
- la figure 4 est une vue en coupe selon le plan IV-IV de la figure 1,
- le figure 5 est une vue en coupe d'un second mode de réalisation proche de celui de l'invention,
- la figure 6 est une vue générale d'un mode de réalisation de l'invention.

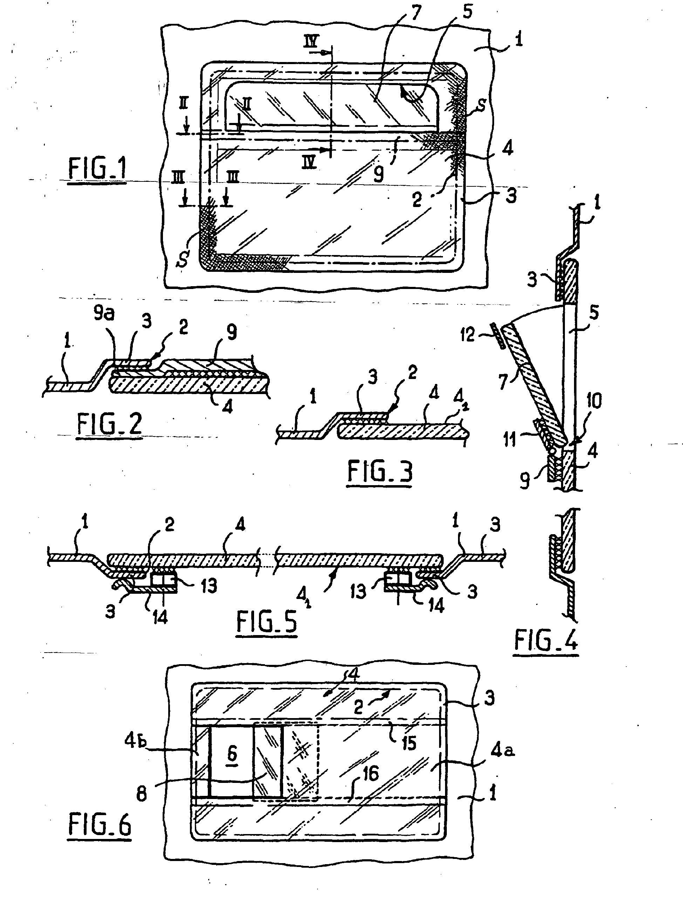

On présente sur la figure 6 une vitre à panneau fixe 4 et à panneau mobile 8 coulissant. Le panneau 4 est en plusieurs parties (ici deux parties 4a et 4b qui délimitent l'ouverture 6, la partie 4a possédant trois côtés de l'ouverture et le panneau 4b le quatrième). Les panneaux sont réunis par tous moyens appropriés disposés sur la face intérieure auxquels peuvent participer un cadre et les traverses fonctionnelles de liaison du panneau mobile. Les zones de jonction des pièces formant le panneau fixe sont disposées dans des zones sérigraphiées.

Le montage d'un dispositif selon l'invention se fait, à l'exception du préassemblage initial des différentes parties constitutives du panneau fixe, de la même façon que pour le dispositif à panneau fixe en une seule pièce illustré par les figures 1 à 5. Ces figures 1 à 5 ne représentent pas un dispositif selon l'invention, dont le panneau 4 est en plusieurs parties, mais permettent de comprendre la fabrication complète et la mise en oeuvre de l'invention.

Sur ces figures, la référence 1 correspond à un panneau de carrosserie de véhicule dans lequel on a ménagé une baie 2. Les bords de la baie sont en léger renfoncement par rapport à la surface extérieure de la carrosserie de manière à pouvoir accueillir un panneau d'obturation qui soit affleurant avec la surface extérieure du panneau 1, Ces bords portent la référence 3 sur les figures.

La fermeture de cette baie est réalisée par un panneau 4 logé dans le creux dont les bords 3 de la baie 2 forment le fond et collé par sa périphérie sur ces bords 3. Le panneau 4 est découpé pour offrir une ouverture 5 (figure 1) ou 6 (figure 6) qui peut être obturée par un panneau secondaire mobile 7 (figure 1) et 8 (figure 6). Le panneau 7 de la figure 1 est monté articulé au moyen d'une traverse 9 elle-même collée sur la face intérieure du panneau 4, par exemple au voisinage immédiat du bord de l'ouverture 5. L'une des particularités du mode de réalisation représenté est que cette traverse 9 se prolonge jusque sous le bord du panneau qui est collé sur le bord 3 de la baie 2. Ainsi, comme illustré dans la figure 2, chaque extrémité 9a de la traverse 9 est prise en sandwich entre ce bord 3 et ce panneau 4.

La figure 4 illustre le fait que la traverse 9 est en réalité une aile d'une charnière 10 dont l'axe de pivotement s'étend parallèlement au bord le plus long de l'ouverture 5, l'autre aile 11 de cette charnière 10 formant le support du panneau 7. En effet, le panneau 7 est rapporté par collage sur l'aile 11 dans une zone adjacente à son bord inférieur. Le bord supérieur du panneau peut comprendre une butée 12 qui coopère avec l'élément de carrosserie ou la partie supérieure du panneau 4 pour maintenir le panneau 7 en position fermée et assurer au moyen d'éléments non représentés l'étanchéité de la fermeture.

La variante de réalisation représentée à la figure 5 comporte la plupart des éléments déjà décrits avec les mêmes références. Le panneau 4 porte ici sur sa face intérieure 4₁ un cadre 13 qui forme une structure fermée à l'intérieur du panneau et écartée du bord périphérique de ce panneau d'une distance suffisante pour que ce panneau puisse être rapporté par collage entre les bords 3 de la baie 2. Ce cadre 13 peut constituer le support d'un certain nombre d'accessoires notamment pour la fixation du panneau sur la carrosserie au moyen par exemple de brides 14. On remarquera à la figure 1 que pour masquer les zones de collage, le panneau fixe 4 comporte des motifs sérigraphiés sur sa périphérie et au niveau de la traverse 9. Cette sérigraphie, connue en elle-même sur les vitres de véhicules, permet également de masquer des cabochons de couverture de têtes de vis ou de rivet qui pourraient être utilisés pour fixer la traverse 9 au panneau 4, aux lieux et place du collage ou en complément de celui-ci.

Enfin à la figure 6, le panneau 8 destiné à obturer l'ouverture 6 ménagée dans le panneau 4 est monté coulissant entre deux traverses 15 et 16, ces traverses 15 et 16 ayant leurs extrémités pouvant être disposées comme l'extrémité 9a de la traverse 9 illustrée par la figure 2. Les traverses 15 et 16 sont ici représentées de manière simple et le panneau 8 coulisse dans un plan différent de celui du panneau 4, du côté intérieur de celui-ci. Ce n'est pas sortir de l'invention que de prévoir de manière connue que les coulisses 15 et 16 soient équipées de rampes pour que le panneau 8 ait au droit de l'ouverture 6 un mouvement louvoyant permettant son placement dans le plan même du panneau 4.

De manière préférée, les panneaux 4, 7 et 8 seront des glaces, glaces qui malgré le fait qu'elles soient équipées d'éléments mobiles permettant l'aération de l'habitacle du véhicule, sont toujours affleurantes par rapport à la carrosserie de ce véhicule. L'avantage esthétique d'une telle disposition se traduit par une absence de solution de continuité, au moins visuelle entre la carrosserie et la glace.

Ce n'est pas sortir du cadre de l'invention que de prévoir des éléments du panneau 4 (lorsqu'il est en plusieurs pièces) qui ne soient pas en glace mais en une autre matière. Un panneau fixe, conformément à l'invention, doit se comprendre comme un élément monobloc qui se rapporte sur la carrosserie du véhicule, cet élément en plusieurs parties préassemblées étant porteur du panneau mobile et des éléments fonctionnels de liaison.

## Revendications

1. Dispositif de fermeture d'une baie (2) ménagée dans la carrosserie (1) d'un véhicule, comprenant un panneau fixe (4) et un panneau mobile (8) par rapport audit panneau fixe (4), ledit panneau mobile pouvant venir obturer ou libérer une ouverture ménagée dans ledit panneau fixe,
ledit panneau mobile étant relié audit panneau fixe par des éléments fonctionnels assurant la mobilité requise,
**caractérisé en ce que** ladite ouverture (6) est formée à distance de la périphérie dudit panneau fixe (4),
**en ce que** ledit panneau fixe est rapporté sur ladite carrosserie par collage de la périphérie de ladite face du panneau fixe (4) tournée vers l'intérieur du véhicule aux bords de ladite baie (2) ménagée dans la carrosserie,
et **en ce que** ledit panneau fixe est réalisé en plusieurs parties (4a, 4b), chacune desdites parties délimitant au moins un côté de ladite ouverture.

2. Dispositif selon la revendication 1, **caractérisé en ce que** ledit panneau fixe est réalisé en une première partie (4a) possédant trois côtés de ladite ouverture et une seconde partie (4b) possédant un quatrième côté de ladite ouverture.

3. Dispositif selon l'une quelconque des revendications 1 et 2, **caractérisé en ce que** la face dudit panneau fixe (4) tournée vers l'intérieur du véhicule porte des éléments fonctionnels (15, 16) assurant la mobilité dudit panneau mobile (8).

4. Dispositif selon la revendication 3, **caractérisé en ce que** le mode de fixation desdits éléments fonctionnels (15, 16) sur la face du panneau fixe (4) tournée vers l'intérieur du véhicule est le collage.

5. Dispositif selon l'une quelconque des revendications 1 à 4, **caractérisé en ce que** lesdits éléments fonctionnels coopèrent à l'assemblage desdites parties formant le panneau fixe.

6. Dispositif selon l'une quelconque des revendications 1 à 5, **caractérisé en ce que** lesdits éléments fonctionnels comportent une traverse qui constitue l'élément fixe d'une charnière longitudinale dont l'élément mobile porte ledit panneau mobile.

7. Dispositif selon l'une quelconque des revendications 1 à 5, **caractérisé en ce que** lesdits éléments fonctionnels comportent deux traverses parallèles de support de rails de guidage pour un mouvement coulissant dudit panneau mobile par rapport audit panneau fixe.

8. Dispositif selon l'une quelconque des revendications 6 et 7, **caractérisé en ce que** les traverses (15, 15) s'étendent jusqu'au bord du panneau fixe (4).

9. Dispositif selon l'une quelconque des revendications 5 à 8, **caractérisé en ce qu'**au moins une desdites traverses (15, 16) se prolonge jusque sous le bord dudit panneau fixe, de façon que les extrémités de ces traverses soient prises en sandwich entre ledit panneau fixe (4) et lesdits bords (3) de ladite baie (2), de façon que ledit panneau mobile (8) soit maintenu même en cas de bris dudit panneau fixe (4).

10. Dispositif selon l'une quelconque des revendications 1 à 8, **caractérisé en ce que**, en position d'obturation de ladite ouverture, ledit panneau mobile (8) est placé dans le plan même dudit panneau fixe (4).

11. Procédé de fabrication et de montage d'un dispositif de fermeture affleurant selon l'une des revendications précédentes, destiné à fermer une baie pratiquée dans la carrosserie (1) d'un véhicule, **caractérisé en ce qu'**il comprend les étapes suivantes :
- réalisation d'un panneau fixe (4) par réunion d'au moins deux parties fixes (4a, 4b), chacune desdites parties délimitant au moins un côté d'une ouverture qui est formée à distance de la périphérie dudit panneau fixe;
- obtention d'un panneau mobile (7, 8) destiné à obturer ladite ouverture ;
- montage dudit panneau mobile sur ledit panneau fixe, à l'aide d'éléments fonctionnels (15, 16) assurant la mobilité requise, ;
- montage dudit dispositif sur ladite carrosserie, par collage de la périphérie de ladite face du panneau fixe tournée vers l'intérieur du véhicule aux bords (3) de ladite baie (2) en retrait de ladite carrosserie.

## Claims

1. Closing device for a window (2) formed in the bodywork (1) of a vehicle, comprising a fixed panel (4) and a mobile panel (8) relative to said fixed panel (4), said mobile panel being able to close or open an aperture formed in said fixed panel,
said mobile panel being connected to said fixed panel by functional elements providing the required mobility,
**characterised in that** said aperture (6) is formed at a distance from the periphery of said fixed panel (4),
**in that** said fixed panel is connected to said bodywork by bonding the periphery of said face of the fixed panel (4), facing the inside of the vehicle, to the edges of said window (2) formed in the bodywork,
and **in that** said fixed panel is made from a plurality of parts (4a, 4b), each of said parts defining at least one side of said aperture.

2. Device according to Claim 1, **characterised in that** said fixed panel is made from a first part (4a) comprising three sides of said aperture and a second part (4b) comprising a fourth side of said aperture.

3. Device according to any one of Claims 1 and 2, **characterised in that** the face of said fixed panel (4), facing the inside of the vehicle, bears functional elements (15, 16) providing the mobility of said mobile panel (8).

4. Device according to Claim 3, **characterised in that** the method of fixing said functional elements (15, 16) to the face of the fixed panel (4), facing the inside of the vehicle, is bonding.

5. Device according to any one of Claims 1 to 4, **characterised in that** said functional elements cooperate in the assembly of said parts forming the fixed panel.

6. Device according to any one of Claims 1 to 5, **characterised in that** said functional elements comprise a cross member which constitutes the fixed element of a longitudinal hinge, the mobile element thereof bearing said mobile panel.

7. Device according to any one of Claims 1 to 5, **characterised in that** said functional elements comprise two parallel cross members for supporting guide rails for a sliding movement of said mobile panel relative to said fixed panel.

8. Device according to any one of Claims 6 and 7, **characterised in that** the cross members (15, 16) extend as far as the edge of the fixed panel (4).

9. Device according to any one of Claims 5 to 8, **characterised in that** at least one of said cross members (15, 16) extends as far as underneath the edge of said fixed panel, so that the ends of said cross members are sandwiched between said fixed panel (4) and said edges (3) of said window (2), so that said mobile panel (8) is held, even in the event of the breakage of said fixed panel (4).

10. Device according to any one of Claims 1 to 8, **characterised in that** when said aperture is closed, said mobile panel (8) is positioned in the same plane of said fixed panel (4) .

11. Method of manufacturing and mounting a flush closing device, according to one of the preceding claims, for closing a window formed in the bodywork (1) of a vehicle, **characterised in that** it comprises the following steps:
- producing a fixed panel (4) by combining at least two fixed parts (4a, 4b) each of said parts defining at least one side of an aperture which is formed at a distance from the periphery of said fixed panel,
- obtaining a mobile panel (7, 8) for closing said aperture;
- mounting said mobile panel on said fixed panel, using functional elements (15, 16) providing the required mobility;
- mounting said device on said bodywork, by bonding the periphery of said face of the fixed panel, facing the inside of the vehicle, to the edges (3) of said window (2) set back from said bodywork.

## Patentansprüche

1. Vorrichtung zum Schließen eines in die Karosserie (1) eines Fahrzeuges eingearbeiteten Fensterausschnittes (2), die ein feststehendes Paneel (4) und ein gegenüber dem feststehenden Paneel bewegliches Paneel (8) aufweist,
wobei das bewegliche Paneel eine in dem feststehenden Paneel befindliche Öffnung sperren oder freigeben kann,
wobei das bewegliche Paneel mit dem feststehenden Paneel mit Hilfe von Funktionselementen verbunden ist, welche die erforderliche Beweglichkeit gewährleisten,
**dadurch gekennzeichnet, dass** die Öffnung (6) mit einem Abstand zu der Umrandung des feststehenden Paneels (4) ausgebildet ist und
dass das feststehende Paneel **dadurch** auf die Karosserie aufgebracht wird, dass die Umrandung der zum Fahrzeuginneren hin gerichteten Fläche des feststehenden Paneels (4) auf die Ränder des in der Karosserie eingearbeiteten Fensterausschnittes (2) aufgeklebt wird und
dass das feststehende Paneel aus mehreren Teilen (4a, 4b) gebildet ist, wobei jedes der Teile mindestens eine Seite der Öffnung begrenzt.

2. Vorrichtung nach Anspruch 1, **dadurch gekennzeichnet, dass** das feststehende Paneel aus einem ersten Teil (4a) besteht, welches drei Seiten der Öffnung bildet, und aus einem zweiten Teil (4b), welches eine vierte Seite der Öffnung bildet.

3. Vorrichtung nach einem der Ansprüche 1 und 2, **dadurch gekennzeichnet, dass** die zum Fahrzeuginneren hin gerichtete Fläche des feststehenden Paneels (4) Funktionselemente (15, 16) trägt, welche die Beweglichkeit des beweglichen Paneels (8) gewährleisten.

4. Vorrichtung nach Anspruch 3, **dadurch gekennzeichnet, dass** die Funktionselemente (15, 16) auf die zum Fahrzeuginneren hin gerichtete Fläche des feststehenden Paneels (4) durch Aufkleben befestigt sind.

5. Vorrichtung nach einem der Ansprüche 1 bis 4, **dadurch gekennzeichnet, dass** die Funktionselemente beim Zusammensetzen der das feststehende Paneel bildenden Teile zusammenwirken.

6. Vorrichtung nach einem der Ansprüche 1 bis 5, **dadurch gekennzeichnet, dass** die Funktionselemente eine Querstrebe umfassen, die das feststehende Element eines Längsscharniers bildet, dessen bewegliches Element das bewegliche Paneel trägt.

7. Vorrichtung nach einem der Ansprüche 1 bis 5, **dadurch gekennzeichnet, dass** die Funktionselemente zwei parallele Querstreben umfassen, die Führungsschienen tragen, um ein gleitendes Verschieben des beweglichen Paneels gegenüber dem feststehenden Paneel zu ermöglichen.

8. Vorrichtung nach einem der Ansprüche 6 und 7, **dadurch gekennzeichnet, dass** die Querstreben (15, 16) sich bis zum Rand des feststehenden Paneels (4) erstrecken.

9. Vorrichtung nach einem der Ansprüche 5 bis 8, **dadurch gekennzeichnet, dass** mindestens eine der Querstreben (15, 16) sich bis unter den Rand des feststehenden Paneels erstreckt, so dass die Enden dieser Querstreben zwischen dem feststehenden Paneel (4) und den Rändern (3) des Fensterausschnitts (2) eingeklemmt werden, so dass auch im Falle des Zerbrechens des feststehenden Paneels (4) das bewegliche Paneel (8) noch gehalten wird.

10. Vorrichtung nach einem der Ansprüche 1 bis 8, **dadurch gekennzeichnet, dass** sich in der Sperrungsposition der Öffnung das bewegliche Paneel (8) in derselben Ebene wie das feststehende Paneel (4) befindet.

11. Verfahren zur Herstellung und Montage einer bündigen Vorrichtung zum Schließen nach einem der vorhergehenden Ansprüche, das bestimmt ist, einen in der Karosserie (1) eines Fahrzeuges eingearbeiteten Fensterausschnitt zu schließen, **dadurch gekennzeichnet, dass** es die folgenden Schritte umfasst:
- Fertigen eines feststehenden Paneels (4) durch Zusammenfügen von mindestens zwei feststehenden Teilen (4a, 4b), wobei jedes der Teile mindestens eine Seite einer Öffnung abgrenzt, die in einem Abstand zur Umrandung des feststehenden Paneels ausgebildet ist;
- Erhalten eines beweglichen Paneels (7, 8), welches dazu bestimmt ist, die Öffnung zu sperren;
- Montieren des beweglichen Paneels auf das feststehende Paneel mit Hilfe von Funktionselementen (15, 16), welche die erforderliche Beweglichkeit gewährleisten;
- Montieren der Vorrichtung auf die Karosserie durch Aufkleben der Umrandung der zum Fahrzeuginneren hin gerichteten Fläche des feststehenden Paneels auf die Ränder (3) des Fensterausschnittes (2) zurückgesetzt zu der Karosserie.
